# EUROPÄISCHE PATENTANMELDUNG

(11) **EP 1 905 527 A1**
(43) Veröffentlichungstag der Anmeldung: **02.04.2008**
(21) Anmeldenummer: 07016964.4
(22) Anmeldetag: 30.08.2007
(51) Int. Cl.: B23K 7/00, B23K 7/10, B23K 37/00, B23K 37/02, B22D 11/126, F16G 13/16, B23K 101/16

(54) **Strangbrennschneidmaschine für gegossene Werkstücke, insbesondere Knüppel und Blöcke aus Stahl**

(30) Priorität: 29.09.2006 DE 102006046522
(71) Anmelder: Aute AG Gesellschaft für autogene Technik, 2068 Hauterive (CH)
(72) Erfinder: Lotz, Horts K., 2068 Hauterive (CH)
(74) Vertreter: Aue, Hans-Peter

(57) **Zusammenfassung**

Die Erfindung betrifft eine Sauerstoff-Strangbrennschneidmaschine (1) für gegossene Werkstücke (2), insbesondere Knüppel und Blöcke aus Stahl, in oder nach einer Stranggießanlage, im Wesentlichen mit mehreren parallelen Rollengängen (5), auf denen jeweils ein durch Schneidbrennen in Werkstücke (2) zu trennender Gießstrang (4) geführt ist, und einer die Rollengänge (5) bzw. Gießstränge (4) überquerenden Brücke (12) mit einem beweglich daran angeordneten Ausleger (13), an dem mindestens ein Brennschneidwagen (11) mit einem Schneidbrenner (15) in Förderichtung des Gießstranges (4) verfahrbar ist. Erfindungsgemäß ist der Ausleger (13) in Fachwerk- oder Doppelrohrausführung aus Kühlwasser-durchflossenen Rohren am brückennahen Ende hochklappbar ausgebildet. Dadurch ist die Strangbrennschneidmaschine (1) robust und wartungsgünstig angeordnet und erlaubt einen sicheren und geschützten Zugriff auf ihre Maschinenteile durch das Reparatur- und Wartungspersonal, wobei der Betrieb der Strangbrennschneidmaschine (1) verbessert wird.

## Beschreibung

Die Erfindung bezieht sich auf eine Sauerstoff-Strangbrennschneidmaschine für gegossene Werkstücke, insbesondere Knüppel und Blöcke aus Stahl, in oder nach einer Stranggießanlage, im Wesentlichen mit mehreren parallelen Rollengängen, auf denen jeweils ein durch Schneidbrennen in Werkstücke zu trennender Gießstrang geführt ist, und einer die Rollengänge bzw. Gießstränge überquerenden Brücke mit einem beweglich daran angeordneten Ausleger, an dem mindestens ein Brennschneidwagen mit einem Schneidbrenner in Förderichtung des Gießstranges verfahrbar ist.

Endlos vergossene Stränge aus Stahl in Stranggießanlagen müssen zur Weiterverarbeitung in transportable und den Endprodukten entsprechende Längen unterteilt werden. Diese überwiegend heißen Knüppel und Blöcke, aber auch Brammen werden üblicherweise durch Sauerstoffschneidbrenner an einer Strangbrennschneidmaschine abgetrennt. Bei einer solchen Strangbrennschneidmaschine verwandelt ein Schneidsauerstoffstrahl den auf Zündtemperatur gebrachten Stahl in eine abfließende Oxydschlacke und erzeugt so eine Fuge, die bei Bewegung in einen Schnitt auswächst.

Wegen des Abkühlens des heißen Stahles infolge der wesentlich niedrigeren Umgebungstemperatur muss die Gießpfanne der Stranggießanlage möglichst schnell entleert werden, um ein zu frühes Erstarren zu verhindern und die Stahlstränge mit noch fließendem Stahl erzeugen zu können. Unter Berücksichtigung der hohen Gießgeschwindigkeit von Knüppel/Blockgießanlagen ist die Konstruktion der Brennscheidmaschine speziell auf das Brennschneiden von Rund-, Quadrat- und Rechteckformaten mit Durchmessern und Querschnitten bis etwa 350 mm ausgerichtet. Dabei hat man die Möglichkeit entweder die Gießgeschwindigkeit zu erhöhen oder mehrere Gießstränge, z.B. 2 bis 8, vorzusehen, um große Stahlmengen verarbeiten zu können. Bei einer Stranggießanlage mit mehreren solchen Gießsträngen laufen die Gießstränge auf in Förderrichtung parallel zueinander verlegten Rollengängen. Die Brennschneidmaschine weist eine Brücke mit Ausleger auf, die quer über die Rollengänge angeordnet ist, wobei je Ausleger mindestens ein längs zum Gießstrang verfahrbarer Brennschneidwagen mit quer dazu arbeitenden Schneidbrenner und Schneiddüse angeordnet ist, mit dem der Gießstrang in Knüppel und Blöcke getrennt wird.

Bei allen bekannten Ausführungen von Strangbrennschneidmaschinen handelt es sich um robuste, überwiegend portalartige, mit Wasserplatten gegen die enorme vom Strang abgestrahlte Hitze geschützte, auf zu beiden Seiten des Stranges angeordneten Schienen verfahrende Maschinengehäuse aus zusammengeschweißten schweren Profilen und Stahlplatten. Eine ebenso erzeugte Maschinenlaufbahn auf den Schienen trägt die Brennschneidwagen mit den Schneidbrennern und die versorgenden Schläuche und Kabel, die in Schlauch- und Kabelschleppketten, auch als Sammelleitungen, geführt werden. Diese Schleppketten sind von hochflexiblen, unbrennbaren Schutzrohren aus metallischen oder keramischen Werkstoffen bzw. Bauteilen umhüllt, wobei konische Hülsen oder Rohrteile auf der Sammelleitung aufgereiht und derart gelenkig verbunden sind, dass die kleinen Durchmesser der Hülsen immer aufwärts und die großen Durchmesser immer abwärts gerichtet sind.

Bei notwendigen Reparatur- und Wartungsarbeiten an der Strangbrennschneidanlage kann es zum Stillstand der Anlage kommen, was mit enormen Kosten- und Zeitaufwand verbunden ist. Beim Reparatur- und Wartungspersonal kann es wegen der unmittelbaren Arbeitsnähe am heißen Gießstrang und der damit verbundenen Hitzeabstrahlung zu mehr oder weniger starken Verletzungen führen.

Bekannt sind Strangbrennschneidmaschinen, die im Wesentlichen aus einem am Gießstrang bzw. Werkstück entlang verfahrbaren Turmwagen mit Fahrantrieb, Gegengewicht, Hubantrieb, Elektrostation, Gasstation, Höhenwagen und einem von Kühlwasser durchflossenen, rahmenartigen Ausleger besteht. Der Ausleger wird über Scharniere und mit einem Schwenkantrieb seitlich drehbar von der Stranggießanlage in einer horizontalen Ebene ausgeschwenkt, um notwendige Reparatur- und Wartungsarbeiten an der Brennschneidmaschine, insbesondere an den Brennschneidwagen ausführen zu können. Allerdings benötigt eine solche Ausführung der Brennschneidmaschine wegen der großen Länge des Auslegers viel zusätzlichen Platz zum Ausschwenken des Auslegers und eine entsprechend aufwändige Gegengewichtskonstruktion und einen starken Schwenkantrieb, so dass der Strangabstand zu groß sein müsste und die Herstellung dieser Brennschneidmaschine sehr kosten- und fertigungsintensiv ist.

Es ist Aufgabe der Erfindung, eine Sauerstoff-Strangbrennschneidmaschine der eingangs genannten Art zu schaffen, die insbesondere robust und wartungsgünstig ausgebildet ist und einen sicheren und geschützten Zugriff auf ihre Maschinenteile durch das Reparatur- und Wartungspersonal erlaubt, obwohl mehrere, bis zu acht Strangbrennschneidmaschinen eng nebeneinander angeordnet sind.

Erfindungsgemäß wird die Aufgabe dadurch gelöst, dass der Ausleger in Fachwerk- oder Doppelrohrausführung aus Kühlwasser-durchflossenen Rohren am brückennahen Ende hochklappbar ausgebildet ist.

Durch diese erfindungsgemäße Lösung kann der Ausleger in einer vertikalen Ebene hochgeklappt und dann die erforderlichen Reparatur- und Wartungsarbeiten am Brennschneidwagen in Ausgangsstellung, beispielsweise ein Brenner- und/oder Düsentausch, durchgeführt werden. Nach Abschluss der Reparatur- und Wartungsarbeiten wird der Ausleger wieder heruntergeklappt. Dabei ist kein zusätzlicher Platz in der Arbeitsebene der Strangbrennschneidmaschine erforderlich. Darüber hinaus sind z.B. die Brennerscheidwagen und andere Maschinenteile leicht für das Reparatur- und Wartungspersonal, z.B. von der den Ausleger tragenden Brücke aus zugänglich.

Weitere Ausgestaltungen ergeben sich aus den Unteransprüchen.

Demgemäß ist der Ausleger um ein Lager oder einen Parallelogramm bildenden Hebelmechanismus manuell, motorisch, hydraulisch oder pneumatisch hochklappbar ausgebildet. Dabei wird der Ausleger beispielsweise um ein Scharnier hochgeklappt, wobei sich der Aufstellwinkel des Auslegers verändert. Bei Verwendung eines Parallelogramm bildenden Hebelmechanismus hingegen wird der Ausleger aus seiner waagerechten Ausrichtung angehoben und zurückgezogen, so dass sich ein größerer Freiraum zwischen den Gießsträngen und dem Ausleger zur Durchführung von notwendigen Arbeiten am Brennschneidwagen für das Reparatur- und Wartungspersonal ergibt. Ob der Ausleger manuell, motorisch, hydraulisch oder pneumatisch hochgeklappt wird, kann z.B. von der Größe bzw. Länge und/oder dem Gewicht und/oder dem erforderlichen zu schaffenden Freiraum des Auslegers abhängig sein.

Ferner kann vorgesehen werden, dass die die Rollengänge bzw. Stränge überquerenden Brücke zumindest ein Lager und einen Klappantrieb für den Ausleger aufweist.

Nach einer weiteren Ausgestaltung erfindungsgemäßen Sauerstoff-Strangbrennschneidmaschine kann das Lager oder der Parallelogramm bildende Hebelmechanismus für das Hochklappen des Auslegers höhenverstellbar ausgebildet sein, so dass bereits mit dem Lager bzw. Hebelmechanismus eine gewisse Höhenverstellung des Auslegers ermöglicht wird.

Des Weiteren kann der Brennschneidwagen einen Höhentaster zum Abschalten der Höhenverstellung des Auslegers aufweisen, um eine automatische Höhenbegrenzung beim Hochklappen des Auslegers zu gewährleisten.

Um den Hochklappvorgang des Auslegers relativ zur diesen tragenden Brücke zu unterstützen, kann nach einer Weiterbildung der Erfindung der Ausleger mittels Seilzug über zumindest eine auf der Brücke befestigte Stütze mit einer oberen Führungsrolle für den Seilzug hochklappbar ausgebildet sein.

Erfindungsgemäß wird die Aufgabe auch dadurch gelöst, dass die Betriebsmittel- und Kühlwasserzufuhr sowie Versorgungs- und Steuerkabel zum Brennscheidwagen innerhalb größerer Kühlwasserschläuche oder hitzeisolierter Schutzschläuche erfolgen, in denen die kleineren Schläuche und Kabel zusammen mit zu- oder abfließendem Wasser für die Schneidbrenner- und Brennschneidwagenkühlung als vorzugsweise flaches Bündel von Schläuchen und Kabeln verlegt sind.

Hierbei können Lagen von Schläuchen und Kabeln der Sammelleitung mit einer Vielzahl von vorzugsweise im Querschnitt rechteckigen, ineinander greifenden Hülsen umgeben und mit Stopfbüchsen oder Flanschen an den Schlauchenden versehen sein. Dadurch wird ein vertikales Durchhängen des als Sammelleitung ausgebildeten Bündels von Schläuchen und Kabeln ermöglicht, um einen Freiraum beim Bewegen der Brücke und/oder des Auslegers der Strangbrennschneidmaschine zu schaffen. Gleichzeitig wird eine horizontale Auslenkung der Sammelleitung weit gehend vermieden, um die Schläuche und Kabel nicht unnötigen Belastungen auszusetzen.

Gemäß einer weiteren Ausgestaltung der erfindungsgemäßen Sauerstoff-Strangbrennschneidmaschine kann das Bündel von Schläuchen und Kabeln zum Brennschneidwagen über eine walzenförmige Unterstützung im Bereich der oberen Mitte des Auslegers und von da zu einem Festpunkt an der Brücke nahe einem Lager bzw. einer Höhenverstellung zum Hochklappen des Auslegers und weiter zu einer Versorgungseinheit geführt werden.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand von Ausführungsbeispielen, die in den Zeichnungen dargestellt sind, näher beschrieben. Es zeigen:
- Fig. 1: eine Seitenansicht einer erfindungsgemäßen Sauerstoff-Strangbrennschneidmaschine mit teilweise hochklappbarem Ausleger in einer ersten Ausführungsform,
- Fig. 2: eine Seitenansicht einer Sauerstoff-Strangbrennschneidmaschine in einer alternativen Ausführungsform mit völlig hochklappbaren Ausleger,
- Fig. 3: eine Seitenansicht einer Sauerstoff-Strangbrennschneidmaschine mit mittels Hebelparallelogramm hochklappbaren Ausleger in einer zweiten Ausführungsform,
- Fig. 4: eine Seitenansicht einer Sauerstoff-Strangbrennschneidmaschine mit mittels Hebelparallelogramm hochklappbaren und verfahrbaren Ausleger in abgesenkter Arbeitslage,
- Fig. 5: eine Draufsicht auf eine Sauerstoff-Strangbrennschneidmaschine mit mehreren, nicht dargestellten Rollengängen,
- Fig. 6: eine Querschnittsansicht einer Sammelleitung für Betriebsmittel- und Kühlwasserzufuhr sowie Versorgungs- und Steuerkabel,
- Fig. 7: eine Draufsicht auf die Sammelleitung gemäß Fig. 6, und
- Fig. 8: eine Seitenansicht der Sammelleitung gemäß Fig. 6.

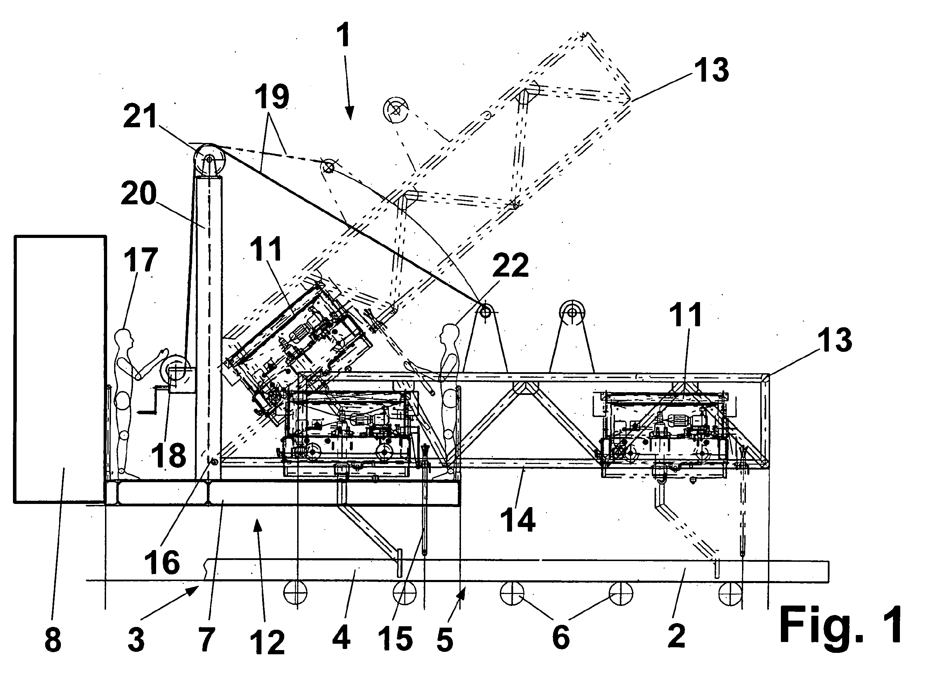

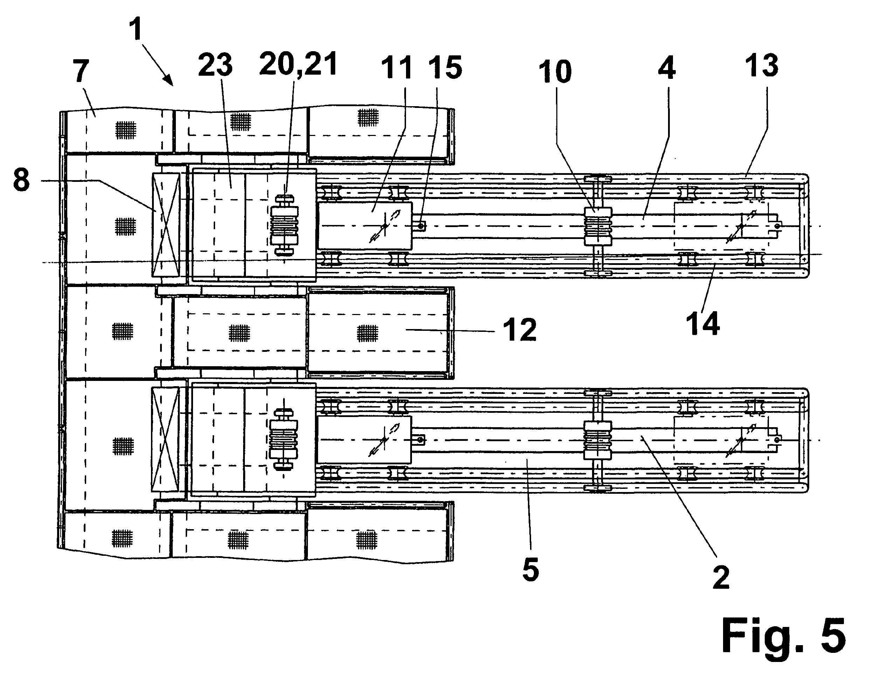

In den Fig. 1 bis 5 ist eine Sauerstoff-Strangbrennschneidmaschine 1 für gegossene Werkstücke 2, insbesondere Knüppel und Blöcke aus Stahl, in oder nach einer in den Fig. 1 bis 4 teilweise gezeigten Stranggießanlage 3 dargestellt, wobei die Werkstücke 2 von einem von der Stranggießanlage 3 zugeführte Gießstrang 4 abgetrennt werden.

Die Strangbrennschneidmaschine 1 kann über mehreren parallelen Rollengängen 5 der Stranggießanlage 3 angeordnet sein, jedoch wird im Folgenden nur auf einen Rollengang 5 in Kombination mit der Strangbrennschneidmaschine 1 Bezug genommen. Der Rollengang 5 besteht aus einer Vielzahl von Rollen 6, auf denen der durch Schneidbrennen in Werkstücke 2 zu trennende Gießstrang 4 geführt ist.

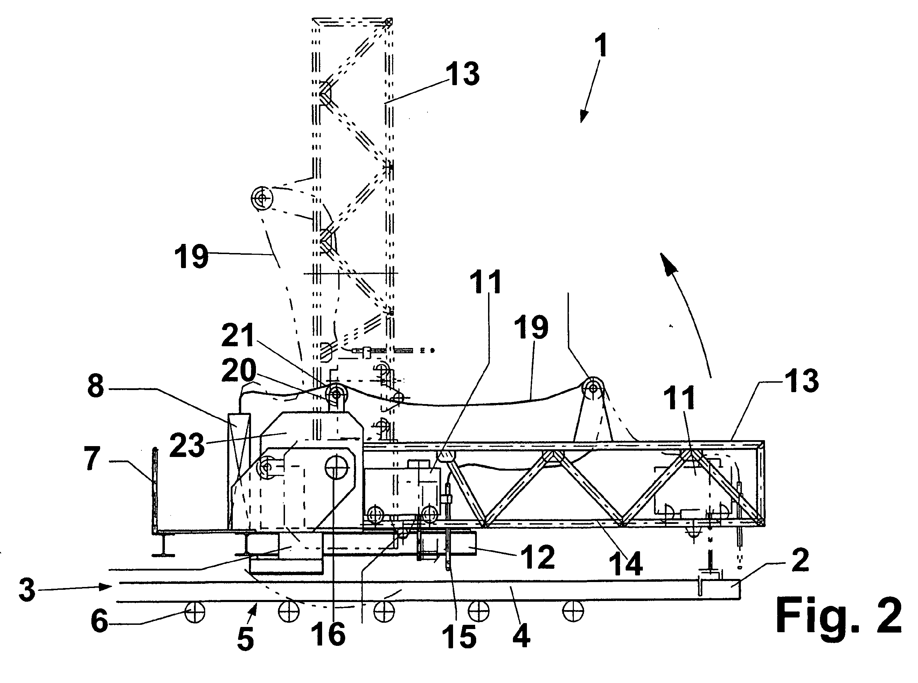

Die Strangbrennschneidmaschine 1 weist einen Brückengang 7 auf, der auf einer nicht dargestellten Basis ruht oder drehbar oder an einer Brücke 12 angeschlossen ist. An dem Brückengang 7 befindet sich gemäß den Fig. 1 und 2 eine Versorgungseinheit 8, in die eine Steuer- und eine Medientafel einer Elektrostation und einer Gasstation integriert sind, von denen gemäß den Fig. 2 bis 4 wassergekühlte, flexible Sammelleitungen 9 über Führungswalzen 10 zu einem noch zu erläuternden Brennschneidwagen 11 geführt werden. Die Ausbildung der Sammelleitung 9 wird später näher erläutert.

Vor dem Brückengang 7 ist die den Rollengang 5 bzw. den Gießstrang 4 überquerende Brücke 12 angeordnet, die im Wesentlichen aus einem offenen, aus wassergekühlten Rohren gebauten rahmen- bzw. gitterartigen Ausleger 13 besteht. Dabei kann der Ausleger 13 in Fachwerk- oder Doppelrohrausführung ausgebildet sein.

Im Ausleger ist ein Brennschneidwagen 11 auf Laufbahnen 14 geführt, der einen Schneidbrenner 15 zum Schneidbrennen des Gießstranges 4 in Werkstücke 2, wie Knüppel und Blöcke, aufweist. Wie in den Fig. 1 bis 5 durch Volllinien und Strichlinien dargestellt, ist der Brennschneidwagen 11 auf den Laufbahnen 14 längs zum Gießstrang 4 verfahrbar. Der Brennschneidwagen 11 kann zum Zwecke der automatischen Höhenbegrenzung beim Hochklappen des Auslegers 13 einen nicht näher dargestellten Höhentaster zum Abschalten der Höhenverstellung des Auslegers 13 aufweisen. Der Ausleger 13 kann zur unteren zugänglichen Wartungsseite hin für Wartung oder Reparatur, z.B. zum Düsenwechsel, Wechsel des Schneidbrenners 15 oder Austausch einer Sammelleitung 9, hochgeklappt werden.

Aber auch ohne Höhenverstellung ist ein Hochklappen des Auslegers 13 möglich, nämlich dann, wenn eine Anpassung der Strangbrennschneidmaschine 1 an die Werkstückdicke oder einen geeigneten Düsenabstand durch Verstellung der Schneidbrenner 15 erfolgt.

Bei der Ausführungsform der Sauerstoff-Strangbrennschneidmaschine 1 gemäß Fig. 1 ist der an der Brücke 12 angelenkte Ausleger 13 am brückennahen Ende um ein Lager 16, das beispielsweise als Scharnier oder Achse ausgebildet ist, manuell in eine schräg geneigte Position hochklappbar. Hierfür weist die die Rollengänge 5 bzw. die Gießstränge 4 überquerende Brücke 12 zumindest einen Klappantrieb für den Ausleger 13 auf, wobei der Klappantrieb in Fig. 1 als von einer Bedienperson 17 zu betätigender Kurbelantrieb 18 ausgebildet ist.

Der Ausleger 13 kann somit bei Betätigung des Kurbelantriebes 18 durch die Bedienperson 17 mittels eines Seilzuges 19 über zumindest eine auf der Brücke 12 befestigte Stütze 20 mit einer oberen Führungsrolle 21 für den Seilzug 19 hochgeklappt werden. Sodann kann eine mit der Wartung und/oder Reparatur z.B. des Brennschneidwagens 11 befasste Person 22 beispielsweise einen Schneidbrenner 15 austauschen. Nach Beendigung der Wartungs- bzw. Reparaturarbeiten wird der Ausleger von der Bedienperson 17 durch Betätigung des Kurbelantriebes 18 wieder in ihre waagerrechte Position abgesenkt.

Fig. 2 zeigt die Strangbrennschneidmaschine 1 gemäß Fig. 1 in einer Ausführungsform, bei der der Ausleger 13 durch einen motorischen, hydraulischen oder pneumatischen Antrieb 23 in eine senkrechte Position hochgeklappt werden kann. Nun kann eine mit der Wartung und/oder Reparatur z.B. des Brennschneidwagens 11 in Ausgangsstellung befasste Person 22 die notwendigen Arbeiten ausführen.

Eine Sammelleitung 9 wird über zwei an der Brücke 12 bzw. am Ausleger 13 befestigte Führungswalzen 10 von einer Versorgungseinheit 8 zum Brennschneidwagen 11 geführt.

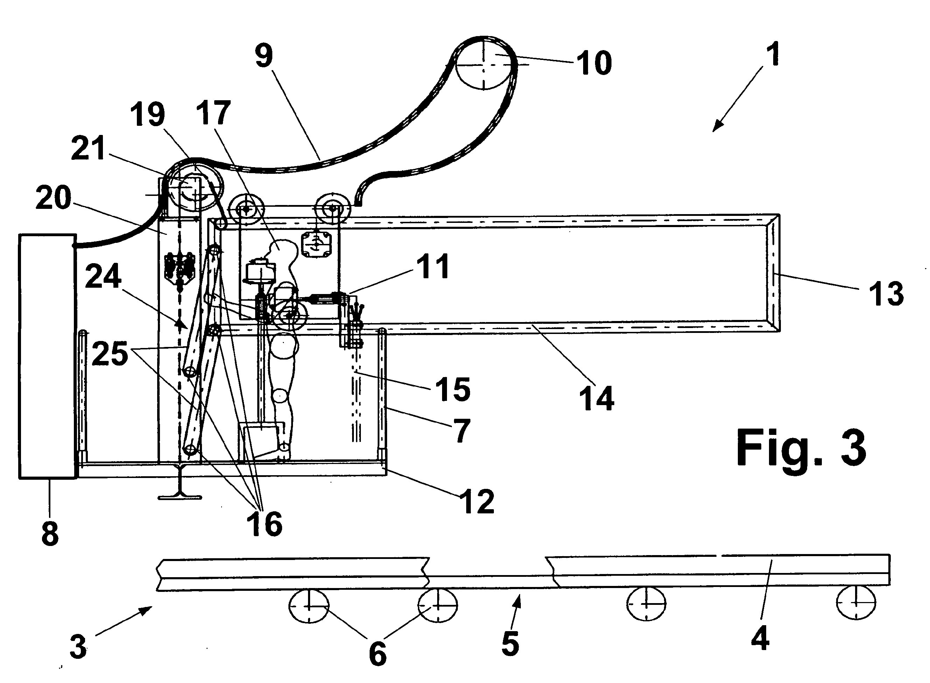

Bei der Ausführungsform der Strangbrennschneidmaschine 1 gemäß Fig. 3 ist zum Hochklappen des Auslegers 13 relativ zum Rollengang 5 bzw. Gießstrang 4 ein Parallelogramm bildender Hebelmechanismus 24 vorgesehen, mit dem der Ausleger 13 manuell, motorisch, hydraulisch oder pneumatisch hochklappbar ist. Der Hebelmechanismus 23 besteht im Wesentlichen aus zwei parallel zueinander angeordneten Hebeln 25, die jeweils mit einem Ende beabstandet an einer Stütze 20 und mit dem jeweils anderen Ende am oberen bzw. unteren brückennahen Ende des Auslegers 13 schwenkbeweglich befestigt sind. Die schwenkbewegliche Befestigung der das Parallelogramm bildenden Hebel 25 erfolgt zweckmäßigerweise an Lagern, Scharnieren oder Achsen 16 an der Stütze 20 und den brückennahen Enden am Rohrrahmen des Auslegers 13.

Gemäß Fig. 3 kann der Ausleger 13 mittels eines Seilzuges 19 über zumindest eine auf der Brücke 12 befestigte Stütze 20 mit einer oberen Führungsrolle 21 für den Seilzug 19 aus einer niedrigeren waagerechten Position in eine höhere waagerechte Position hochgezogen werden.

Eine Sammelleitung 9 wird über eine an einer Basis befestigte Führungswalze 10 und eine an der Stütze 20 an der Brücke 12 befestigte zweite Führungswalze 10 von einer Versorgungseinheit 8 zum Brennschneidwagen 11 geführt.

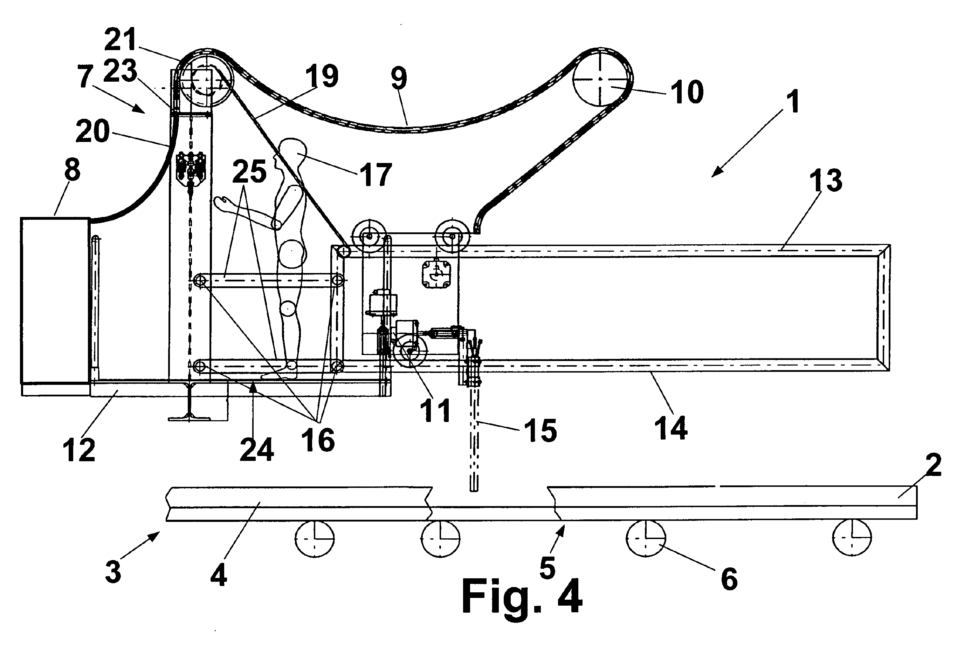

Fig. 4 zeigt eine Strangbrennschneidmaschine 1 mit hochklappbaren Ausleger 13, der mit einem motorischen, hydraulischen oder pneumatischen Antrieb 23 und Hebelmechanismus in die Arbeitsstellung von der Brücke 12 aus längs zum Rollengang 5 bzw. Gießstrang 4 verstellbar und hebbar ist.

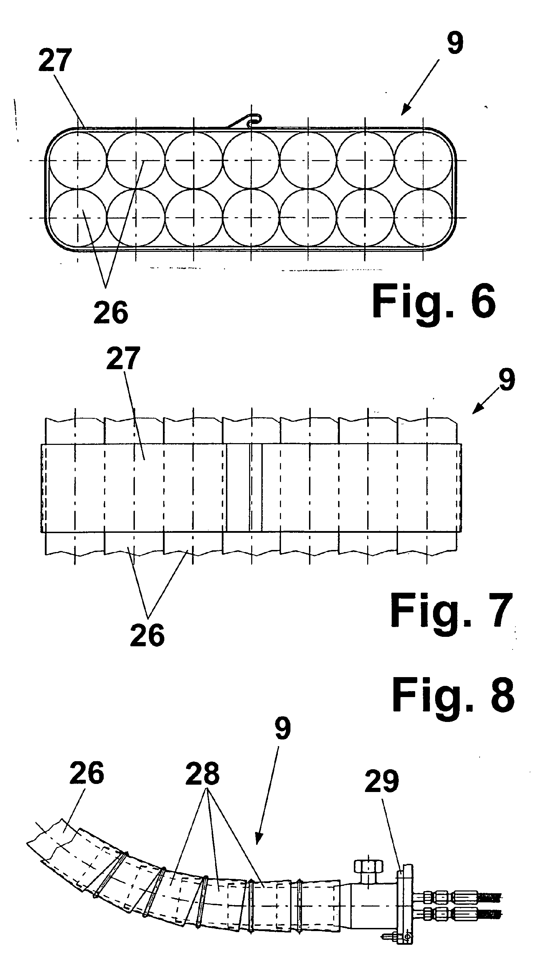

Die Betriebsmittel- und Kühlwasserzufuhr sowie Versorgungsschläuche und Steuerkabel 26 zum Brennschneidwagen 11 erfolgt gemäß den Fig. 6 bis 8 innerhalb größerer Kühlwasserschläuche oder hitzeisolierter Schutzschläuche, in denen die kleineren Schläuche und Kabel 26 zusammen mit zu- oder abfließendem Wasser für die Schneidbrenner- und Brennschneidwagenkühlung als vorzugsweise flaches Bündel von Schläuchen und Kabeln 26 verlegt sind. Dadurch wird eine relativ flache, wassergekühlte und flexible Sammelleitung 9 gebildet, die von der Versorgungseinheit 8 der Strangbrennscheidemaschine 1 zum Brennschneidwagen 11 geführt ist.

Die Lagen von Schläuchen und Kabeln 26 der Sammelleitung 9 sind zu deren Zusammenhalt mit einem Blechband 27 umhüllt und mit einer Vielzahl von vorzugsweise im Querschnitt rechteckigen, ineinander greifenden Hülsen 28 umgeben, so dass sich ein flexibles Schutzrohr ergibt. Das Ende der Sammelleitung 9 ist mit einer Stopfbüchse bzw. einem Flansch 29 versehen, um diese an der Versorgungseinheit 8 bzw. dem Brennschneidwagen 11 anzuschließen.

### Liste der Bezugszeichen

- 1: Strangbrennschneidmaschine
- 2: Werkstück
- 3: Stranggießanlage
- 4: Gießstrang
- 5: Rollengang
- 6: Rolle
- 7: Brückengang
- 8: Versorgungseinheit
- 9: Sammelleitung
- 10: Führungswalze
- 11: Brennschneidwagen
- 12: Brücke
- 13: Ausleger
- 14: Laufbahn
- 15: Schneidbrenner
- 16: Lager, Scharnier, Achse
- 17: Bedienperson
- 18: Kurbelantrieb
- 19: Seilzug
- 20: Stütze
- 21: Führungsrolle
- 22: Wartungsperson
- 23: Antrieb
- 24: Hebelmechanismus
- 25: Hebel
- 26: Schläuche, Kabel
- 27: Blechband
- 28: Hülse
- 29: Stopfbüchse, Flansch

## Patentansprüche

1. Sauerstoff-Strangbrennschneidmaschine (1) für gegossene Werkstücke (2), insbesondere Knüppel und Blöcke aus Stahl, in oder nach einer Stranggießanlage, im Wesentlichen mit mehreren parallelen Rollengängen (5), auf denen jeweils ein durch Schneidbrennen in Werkstücke (2) zu trennender Gießstrang (4) geführt ist, und einer die Rollengänge (5) bzw. Gießstränge (4) überquerenden Brücke (12) mit einem beweglich daran angeordneten Ausleger (13), an dem mindestens ein Brennschneidwagen (11) mit einem Schneidbrenner (15) in Förderichtung des Gießstranges (4) verfahrbar ist, **dadurch gekennzeichnet, dass** der Ausleger (13) in Fachwerk- oder Doppelrohrausführung aus Kühlwasserdurchflossenen Rohren am brückennahen Ende hochklappbar ausgebildet ist.

2. Sauerstoff-Strangbrennschneidmaschine nach Anspruch 1, **dadurch gekennzeichnet, dass** der Ausleger (13) um ein Lager (16) oder einen Parallelogramm bildenden Hebelmechanismus (24) manuell, motorisch, hydraulisch oder pneumatisch hochklappbar ist.

3. Sauerstoff-Strangbrennschneidmaschine nach Anspruch 1 oder 2, **dadurch gekennzeichnet, dass** die die Rollengänge (5) bzw. Gießstränge (4) überquerenden Brücke (12) zumindest ein Lager (16) und einen Klappantrieb (18,23) für den Ausleger (13) aufweist.

4. Sauerstoff-Strangbrennschneidmaschine nach Anspruch 2 oder 3, **dadurch gekennzeichnet, dass** das Lager (16) oder der Parallelogramm bildende Hebelmechanismus (24) für das Hochklappen des Auslegers (13) höhenverstellbar ausgebildet ist.

5. Sauerstoff-Strangbrennschneidmaschine nach Anspruch 1, **dadurch gekennzeichnet, dass** der Brennschneidwagen (11) einen Höhentaster zum Abschalten der Höhenverstellung des Auslegers (13) aufweist.

6. Sauerstoff-Strangbrennschneidmaschine nach Anspruch 1, **dadurch gekennzeichnet, dass** der Ausleger (13) mittels Seilzug (19) über zumindest eine auf der Brücke (12) befestigte Stütze (20) mit einer oberen Führungsrolle (21) für den Seilzug (19) hochklappbar ist.

7. Sauerstoff-Strangbrennschneidmaschine dem Oberbegriff des Anspruches 1, **dadurch gekennzeichnet, dass** die Betriebsmittel- und Kühlwasserzufuhr sowie Versorgungs- und Steuerkabel (29) zum Brennscheidwagen (11) innerhalb größerer Kühlwasserschläuche oder hitzeisolierter Schutzschläuche erfolgen, in denen die kleineren Schläuche und Kabel (29) zusammen mit zu- oder abfließendem Wasser für die Schneidbrenner- und Brennschneidwagenkühlung als vorzugsweise flaches Bündel von Schläuchen und Kabeln (29) verlegt sind.

8. Sauerstoff-Strangbrennschneidmaschine nach Anspruch 7, **dadurch gekennzeichnet, dass** Lagen von Schläuchen und Kabeln (29) der Sammelleitung (9) mit einer Vielzahl von vorzugsweise im Querschnitt rechteckigen, ineinander greifenden Hülsen (31) umgeben und mit Stopfbüchsen oder Flanschen (32) an den Schlauchenden versehen sind.

9. Sauerstoff-Strangbrennschneidmaschine nach Anspruch 7, **dadurch gekennzeichnet, dass** das Bündel von Schläuchen und Kabeln (29) zum Brennschneidwagen (11) über eine walzenförmige Unterstützung im Bereich der oberen Mitte des Auslegers (13) und von da zu einem Festpunkt an der Brücke (12) nahe einem Lager bzw. einer Höhenverstellung zum Hochklappen des Auslegers (13) und weiter zu einer Versorgungseinheit (8) geführt ist.
